# Europäisches Patentamt

# European Patent Office

# Office européen des brevets

(11) Veröffentlichungsnummer: **0 104 606**
**B1**

(12) **EUROPÄISCHE PATENTSCHRIFT**

(45) Veröffentlichungstag der Patentschrift:
**11.05.88**

(21) Anmeldenummer: **83109415.6**

(22) Anmeldetag: **21.09.83**

(51) Int. Cl.⁴: **H 04 L 11/00**

(54) Verfahren zum Identifizieren einer rufenden Teilnehmerstelle anhand ihrer Anschlusskennung in einer Durchgangsvermittlungsstelle einer Fernschreib- und Datenvermittlungsanlage.

(30) Priorität: **24.09.82 DE 3235417**

(43) Veröffentlichungstag der Anmeldung:
**04.04.84 Patentblatt 84/14**

(45) Bekanntmachung des Hinweises auf die Patenterteilung:
**11.05.88 Patentblatt 88/19**

(84) Benannte Vertragsstaaten:
**AT CH DE IT LI SE**

(56) Entgegenhaltungen:
**EP - A - 0 087 760**
**EP - A - 0 104 605**
**BE - A - 645 785**
**US - A - 3 595 986**

**NATIONAL TELECOMMUNICATIONS CONFERENCE, Band 3, 29.-30. November - 1. Dezember 1976, Dallas, Texas, Seiten 47.1-1 - 47.1-5, IEEE, New York, US; H. UCHIYAMA et al.: "Call processing and circuit maintenance in the CT-10 electronic telex switching system"**

(73) Patentinhaber: **Siemens Aktiengesellschaft Berlin und München, Wittelsbacherplatz 2, D-8000 München 2 (DE)**

(72) Erfinder: **Franz, Dietmar, Ing. grad., Edelweissstrasse 66, D-8039 Puchheim (DE)**
Erfinder: **Torggler, Norbert, Dipl.-Ing., Bellinzonastrasse 7, D-8000 München 71 (DE)**

## Beschreibung

Die Erfindung bezieht sich auf ein Verfahren zum Identifizieren einer an einer Ursprungsvermittlungsstelle einer wenigstens die Ursprungsvermittlungsstelle, wenigstens eine Durchgangsvermittlungsstelle und wenigstens eine Zielvermittlungsstelle umfassenden Fernschreib- und Datenvermittlungsanlage angeschlossenen rufenden Teilnehmerstelle anhand ihrer Anschlusskennung zwecks Berechnung von Gebühren betreffend Verbindungen, die von dieser Teilnehmerstelle aus über eine Durchgangsvermittlungsstelle verlaufen, wobei eine solche Verbindung dadurch aufgebaut wird, dass zunächst von der Ursprungsvermittlungsstelle zu der Zielvermittlungsstelle eine Wahlinformation übertragen wird, woraufhin von der Zielvermittlungsstelle nach deren Durchschaltung ein diese Durchschaltung anzeigendes Durchschaltesignal an die Durchgangsvermittlungsstelle und über diese an die Ursprungsvermittlungsstelle übertragen wird, welches die Durchschaltung der Durchgangsvermittlungsstelle und der Ursprungsvermittlungsstelle zu der rufenden Teilnehmerstelle hin bewirkt, und dass aus dem betreffenden Durchschaltesignal in der Ursprungsvermittlungsstelle ein über die Zielvermittlungsstelle an eine an diese angeschlossene gerufene Teilnehmerstelle zu übertragendes Signal abgeleitet wird, mit welchem dieser Teilnehmerstelle der Aufbau der Verbindung angezeigt wird.

Ein Verfahren zum Verbindungsaufbau, von dem bei der vorliegenden Erfindung ausgegangen wird, ist bereits in Datennetzen nach der CCITT-Empfehlung X.70 bzw. X.71 realisierbar, in denen Verbindungen von einer Ursprungsvermittlungsstelle aus über mindestens eine Durchgangsvermittlungsstelle zu einer Zielvermittlungsstelle hin aufzubauen sind. Bei solchen Verbindungen erfolgt die Berechnung von Gebühren üblicherweise in der Ursprungsvermittlungsstelle.

Eine vergleichbare Anmeldung ist die EP-A-01 04 605 mit gleichem Anmeldetag (21.09.93) und gleicher Priorität (24.09.92). Es ist weiterhin bekannt, bei in Fernschreibnetzen über eine Durchgangsvermittlungsstelle verlaufenden Verbindungen im Zug des jeweiligen Verbindungsaufbaues von der Durchgangsvermittlungsstelle her den Kennungsgeber des jeweils rufenden Fernschreibgerätes zum Zwecke der Gebührenerfassung abzufragen. Eine solche Vorgehensweise ist im allgemeinen, insbesondere aber in Datennetzen, nicht möglich, da beispielsweise bei den in Datennetzen für einen Verbindungsaufbau abzuwickelnden Signalisierungsprozeduren ein Austausch bzw. ein Abfragen von Kennungsgebern nicht vorgesehen ist. Eine Abfrage des Kennungsgebers einer rufenden Teilnehmerstelle, falls ein solcher in dieser überhaupt vorgesehen ist, könnte hier allenfalls in der Datenübertragungsphase erfolgen. Dies bringt aber erhebliche Probleme mit sich, da hierzu die in der Datenübertragungsphase übertragenen Datensignale in der Durchgangsvermittlungsstelle mitgelesen werden müssten. Ein solches Mitlesen wird insbesondere dann technisch aufwendig sein, wenn innerhalb eines solchen Datennetzes für die Übertragung von Datensignalen beliebige, lediglich zwischen den an einer Verbindung beteiligten Teilnehmerstellen abzustimmende Übertragungsprozeduren vorgesehen sind. Die Abfrage von Kennungsgebern zum Zwecke der Gebührenerfassung bringt dabei weiterhin den Nachteil mit sich, dass es sich bei diesen Kennungsgebern um Teilnehmereinrichtungen handelt, die der Kontrolle durch den Betreiber des jeweiligen Netzes nicht unterstehen.

Der vorliegenden Erfindung liegt nun die Aufgabe zugrunde, einen Weg zu zeigen, wie auf relativ einfache Weise bei einem Verfahren der eingangs genannten Art die in Endvermittlungsstellen für die daran angeschlossenen Teilnehmerstellen gespeicherten Anschlusskennungen zu der Durchgangsvermittlungsstelle hin übertragen werden können.

Gelöst wird die vorstehend aufgezeigte Aufgabe bei einem Verfahren der eingangs genannten Art erfindungsgemäss dadurch, dass von der Durchgangsvermittlungsstelle auf das Eintreffen des Durchschaltesignals hin zunächst anstelle dieses Durchschaltesignals an die Ursprungsvermittlungsstelle ein von dieser die Abgabe der Anschlusskennung an die Durchgangsvermittlungsstelle bewirkendes Steuersignal abgegeben wird, dass bei Eintreffen der betreffenden Anschlusskennung in der Durchgangsvermittlungsstelle von dieser dann das zuvor aufgenommene Durchschaltesignal an die Ursprungsvermittlungsstelle weitergeleitet wird und dass die Durchgangsvermittlungsstelle die ihr zugeführte Anschlusskennung gegebenenfalls mit der zuvor aufgenommenen, die gerufene Teilnehmerstelle betreffenden Wahlinformation für die Gebührenermittlung bereitstellt.

Die Erfindung bringt den Vorteil mit sich, dass für die Identifizierung einer rufenden Teilnehmerstelle in der Durchgangsvermittlungsstelle einer Fernschreib- und Datenvermittlungsanlage im Zuge des Verbindungsaufbaues lediglich ein geringer Steuerungsaufwand erforderlich ist.

Im folgenden wird die Erfindung anhand von Zeichnungen beispielsweise näher beschrieben.

Fig. 1 zeigt in einem Blockschaltbild eine Schaltungsanordnung, bei der die Erfindung angewandt ist,

Fig. 2 zeigt ein Diagramm, auf das im Zuge der Erläuterung der Erfindung eingegangen wird.

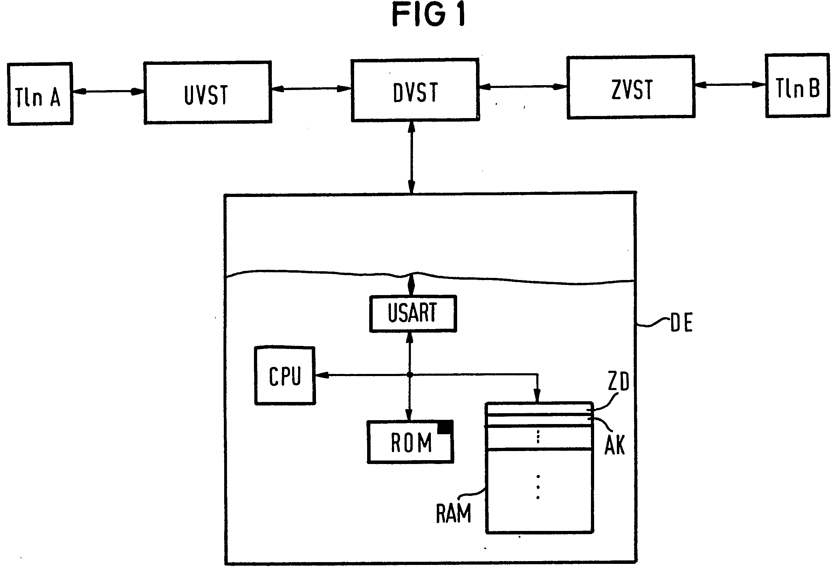

In Fig. 1 ist eine Fernschreib- und Datenvermittlungsanlage dargestellt, die eine Ursprungsvermittlungsstelle UVST, eine Durchgangsvermittlungsstelle DVST und eine Zielvermittlungsstelle ZVST aufweist. An die Ursprungsvermittlungsstelle ist eine Teilnehmerstelle TlnA angeschlossen, von der aus, wie in folgenden noch näher dargestellt werden wird, eine Verbindung zu der an der Zielvermittlungsstelle angeschlossenen Teilnehmerstelle TlnB aufgebaut werden möge. Bei diesen Teilnehmerstellen kann es sich beispielsweise um Bürofernschreibeinrichtungen handeln, die auch als Teletex-Endgeräte bezeichnet werden. In Fig. 1 ist an die Ursprungsvermittlungsstelle und an die Zielvermittlungsstelle lediglich jeweils eine Teilnehmerstelle angeschlossen. Im allgemeinen weisen jedoch derartige Vermittlungsstellen eine Mehrzahl solcher Teilnehmerstellen auf. Die gerade genannten Vermittlungsstellen stehen auch im allgemeinen mit der Durchgangsvermittlungsstelle über eine Mehrzahl von Verbindungsleitungen in Verbindung. Von diesen Verbindungsleitungen ist in Fig. 1 lediglich eine dargestellt. Ausserdem kann die Zielvermittlungsstelle auch die Funktion einer Ursprungsvermittlungsstelle übernehmen, wenn beispielsweise eine Verbindung von der Teilnehmerstelle TlnB zu der Teilnehmerstelle TlnA hin aufzubauen ist. In diesem Fall würde dann die hier als Ursprungsvermittlungsstelle bezeichnete Vermittlungsstelle die Funktion einer Zielvermittlungsstelle übernehmen. Da es sich bei den Teilnehmerstellen um Teletex-Endgeräte handeln möge, erfolgt die Signalübertragung von bzw. zu den Teilnehmerstellen und auf den die Vermittlungsstellen verbindenden Verbindungsleitungen nach einem synchronen Übertragungsverfahren, beispielsweise auf den Teilnehmerleitungen gemäss der CCITT-Empfehlung X.21 und auf den Verbindungsleitungen gemäss der CCITT-Empfehlung X.71. Mit der Durchgangsvermittlungsstelle DVST ist eine Datenverwaltungseinrichtung DE verbunden, in der für eine spätere Gebührenermittlung die für die über die Durchgangsvermittlungsstelle verlaufenden Verbindungen relevanten Daten, wie z.B. die Anschlusskennung der jeweils rufenden Teilnehmerstelle, die Wahlinformation der gerufenen Teilnehmerstelle, der Zeitpunkt der Durchschaltung der Verbindung und der Zeitpunkt des Auslösens der Verbindung, gespeichert werden. Die Datenverwaltungseinrichtung DE steht über eine Sende-/Empfangsschaltung USART mit der zugehörigen Durchgangsvermittlungsstelle in Verbindung. Diese Sende-/Empfangsschaltung setzt einerseits die ihr von der Durchgangsvermittlungsstelle her in serieller Form zugeführten Signale in eine parallele Form und die an die Durchgangsvermittlungsstelle abzugebenden, ihr zunächst in paralleler Form zugeführten Signale in eine serielle Form um. Die Sende-/Empfangsschaltung ist ausserdem über eine Busleitungsanordnung mit einem Mikroprozessor CPU verbunden. An die Busleitungsanordnung sind ausserdem ein als Programmspeicher dienender Festwertspeicher ROM und ein Datenspeicher RAM mit wahlfreiem Zugriff angeschlossen. Der Datenspeicher RAM weist eine Mehrzahl von Speicherbereichen auf, in die von dem Mikroprozessor CPU her die für eine Gebührenermittlung relevanten Verbindungsdaten der über die Durchgangsvermittlungsstelle verlaufenden Verbindungen einschreibbar sind.

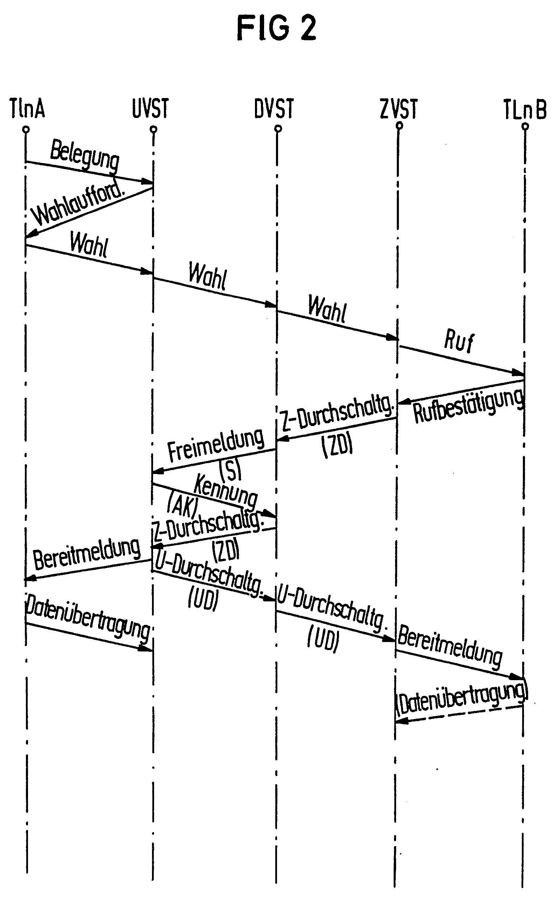

Nunmehr sei das erfindungsgemässe Verfahren unter Bezugnahme auf die in Fig. 1 dargestellte Schaltungsanordnung und unter Heranziehung des Diagramms gemäss Fig. 2 näher erläutert. Für eine von der Teilnehmerstelle TlnA zu der Teilnehmerstelle TlnB hin aufzubauenden Verbindung wird von der Teilnehmerstelle TlnA ein Belegungssignal («Belegung» in Fig. 2) abgegeben. Aufgrund dieses Belegungssignals sendet die Ursprungsvermittlungsstelle UVST ein Wahlaufforderungssignal («Wahlaufforderung» in Fig. 2) in Rückwärtsrichtung an die Teilnehmerstelle TlnA, die auf die Aufnahme dieses Signals hin eine Wahlinformation, hier die der Teilnehmerstelle TlnB zugehörigen Wahlziffern, an die Ursprungsvermittlungsstelle UVST abgibt. Die Wahlinformation wird dann von dieser über die Durchgangsvermittlungsstelle DVST an die Zielvermittlungsstelle ZVST weitergeleitet («Wahl» in Fig. 2). Von der Durchgangsvermittlungsstelle her wird ausserdem ein Signal zu dem Mikroprozessor CPU der Datenverwaltungseinrichtung DE (Fig. 1) hin übertragen, welches in der Datenverwaltungseinrichtung die Belegung eines bereits erwähnten Speicherbereiches des Datenspeichers RAM bewirkt. In diesem Speicherbereich werden die Wahlinformation und, wie im folgenden noch näher erläutert werden wird, die für die gerade aufzubauende Verbindung relevanten Daten im Zuge des Verbindungsaufbaues abgespeichert.

Die Zielvermittlungsstelle ZVST ermittelt anhand der ihr gerade zugeführten Wahlinformation die gerufene Teilnehmerstelle, hier die Teilnehmerstelle TlnB, und leitet an diese ein Rufsignal weiter («Ruf» in Fig. 2). Auf das Eintreffen dieses Rufsignals hin gibt die gerufene Teilnehmerstelle TlnB ein Rufbestätigungssignal («Rufbestätigung» in Fig. 2) an die zugehörige Zielvermittlungsstelle ZVST ab, die aufgrund dieses Rufbestätigungssignals die Durchschaltung vornimmt und ein entsprechendes Durchschaltesignal («Z-Durchschaltung ZD» in Fig. 2) zu der Durchgangsvermittlungsstelle DVST hin überträgt. Die Durchgangsvermittlungsstelle leitet dann das ihr gerade zugeführte Durchschaltesignal über die Sende-/Empfangsschaltung USART an den Mikroprozessor CPU der Datenverwaltungseinrichtung DE weiter (Fig. 1). Der Mikroprozessor überträgt dieses Durchschaltesignal zur Zwischenspeicherung in den bereits für diese Verbindung reservierten Speicherbereich und gibt an die zugehörige Durchgangsvermittlungsstelle DVST ein Steuersignal in Form einer Freimeldung ab. Die Durchgangsvermittlungsstelle leitet dann diese Freimeldung («Freimeldung S» in Fig. 2) an die Ursprungsvermittlungsstelle UVST weiter, die ihrerseits aufgrund dieser Freimeldung die in ihr für die rufende Teilnehmerstelle TlnA gespeicherte Anschlusskennung («Kennung AK» in Fig. 2) an die Durchgangsvermittlungsstelle DVST abgibt.

Die Durchgangsvermittlungsstelle DVST übergibt dem Mikroprozessor CPU der Datenverwaltungseinrichtung DE die ihr gerade zugeführte Anschlusskennung, der diese in den reservierten Speicherbereich des Datenspeichers RAM überträgt. Anschliessend übernimmt der Mikroprozessor das bereits in diesem Speicherbereich zwischengespeicherte Durchschaltesignal und übergibt dieses der zugehörigen Durchgangsvermittlungsstelle. Aufgrund dieses Durchschaltesignals führt die Durchgangsvermittlungsstelle die Durchschaltung durch und überträgt das ihr gerade zugeführte Durchschaltesignal zu der Ursprungsvermittlungsstelle UVST hin («Z-Durchschaltung ZD» in Fig. 2). Dieses Durchschaltesignal bewirkt dann in der Ursprungsvermittlungsstelle die Durchschaltung zu der rufenden Teilnehmerstelle hin. Der Durchschaltezustand wird dabei der rufenden Teilnehmerstelle TlnA durch ein entsprechendes Signal angezeigt («Bereitmeldung» in Fig. 2). Ausserdem wird aus diesem Durchschaltesignal ein den Durchschaltezustand der Ursprungsvermittlungsstelle anzeigendes Signal («U-Durchschaltung UD» in Fig. 2) abgeleitet und an die zugehörige Zielvermittlungsstelle abgegeben. Aufgrund dieses Signals erhält dann die gerufene Teilnehmerstelle TlnB ein Signal in Form einer Bereitmeldung. Damit ist die Verbindung zu der gerufenen Teilnehmerstelle vollständig aufgebaut. Es schliesst sich nun die Datenübertragung gegebenenfalls in beiden Übertragungsrichtungen an.

Der Zeitpunkt der Durchschaltung der Durchgangsvermittlungsstelle DVST wird ebenfalls in den bereits erwähnten Speicherbereich des der Datenverwaltungseinrichtung DE zugehörigen Datenspeichers RAM übernommen. Die in dem Speicherbereich im Zuge des Verbindungsaufbaus zwischengespeicherten Daten verbleiben hier bis zum Aufbau der Verbindung. Der Zeitpunkt des Verbindungsabbaus wird dabei im übrigen ebenfalls zwischengespeichert. Nach dem Verbindungsabbau werden sämtliche für diese Verbindung zwischengespeicherten Daten zu der Durchgangsvermittlungsstelle DVST hin für eine Berechnung der angefallenen Gebühren übertragen. Diese Berechnung kann dann beispielsweise in der Durchgangsvermittlungsstelle selbst oder in einer gesonderten Nachverarbeitungseinrichtung erfolgen.

Bei dem vorstehend erläuterten Ausführungsbeispiel sind an die Ursprungsvermittlungsstelle und an die Zielvermittlungsstelle jeweils Teletex-Endgeräte angeschlossen, d.h. dass die Vermittlungsstellen zu ein und demselben Datennetz gehören. Es ist jedoch auch möglich, dass die genannten Vermittlungsstellen zu unterschiedlichen Netzen gehören, wie z.B. zu Fernschreibnetzen und Datennetzen. In diesem Fall stellt die in Fig. 1 dargestellte Durchgangsvermittlungsstelle eine Vermittlungsstelle dar, die einen Netzübergang zwischen den betreffenden Netzen ermöglicht.

**Patentanspruch**

Verfahren zum Identifizieren einer an einer Ursprungsvermittlungsstelle (UVST) einer wenigstens die Ursprungsvermittlungsstelle, wenigstens eine Durchgangsvermittlungsstelle (DVST) und wenigstens eine Zielvermittlungsstelle (ZVST) umfassenden Fernschreib- und Datenvermittlungsanlage angeschlossenen rufenden Teilnehmerstelle (TlnA) zwecks Berechnung von Gebühren betreffend Verbindungen, die von dieser Teilnehmerstelle aus über eine Durchgangsvermittlungsstelle verlaufen, wobei eine solche Verbindung dadurch aufgebaut wird, dass zunächst von der Ursprungsvermittlungsstelle zu der Zielvermittlungsstelle eine Wahlinformation übertragen wird, woraufhin von der Zielvermittlungsstelle nach deren Durchschaltung ein diese Durchschaltung anzeigendes Durchschaltesignal (ZD) an die Durchgangsvermittlungsstelle und über diese an die Ursprungsvermittlungsstelle übertragen wird, welches die Durchschaltung der Durchgangsvermittlungsstelle und der Ursprungsvermittlungsstelle zu der rufenden Teilnehmerstelle hin bewirkt, und dass aus dem betreffenden Durchschaltesignal in der Ursprungsvermittlungsstelle (UVST) ein über die Zielvermittlungsstelle an eine an diese angeschlossene gerufene Teilnehmerstelle (TlnB) zu übertragendes Signal abgeleitet wird, mit welchem dieser Teilnehmerstelle der Aufbau der Verbindung angezeigt wird, dadurch gekennzeichnet, dass von der Durchgangsvermittlungsstelle (DVST) auf das Eintreffen des Durchschaltesignals (ZD) hin zunächst anstelle dieses Durchschaltesignals an die Ursprungsvermittlungsstelle (UVST) ein von dieser die Abgabe der Anschlusskennung (AK) an die Durchgangsvermittlungsstelle (DVST) bewirkendes Steuersignal (S) abgegeben wird, dass bei Eintreffen der betreffenden Anschlusskennung in der Durchgangsvermittlungsstelle von dieser dann das zuvor aufgenommene Durchschaltesignal (ZD) an die Ursprungsvermittlungsstelle weitergeleitet wird und dass die Durchgangsvermittlungsstelle die ihr zugeführte Anschlusskennung gegebenenfalls mit der zuvor aufgenommenen, die gerufene Teilnehmerstelle (TlnB) betreffenden Wahlinformationen für die Gebührenermittlung bereitstellt.

**Claim**

1. A method of identifying a calling subscriber station (TlnA) connected to an originating exchange (UVST) of a teleprinter and data switching system which comprises at least the originating exchange, at least one transit exchange (DVST) and at least one terminating exchange (ZVST), in order to calculate charges relating to connections from this subscriber station via a transit exchange, where such a connection is established in that firstly a selection information is transmitted from the originating exchange to the terminating exchange, whereupon the terminating exchange, having been switched through, transmits a switch-through signal (ZD), indicating this switch-through, to the transit exchange and via the transit exchange to the originating exchange, which switch-through signal switches through the transit exchange and the originating exchange to the calling subscriber station, and that in the originating exchange (UVST) from the respective switch-through signal a signal is derived which is to be transmitted via the terminating exchange to a called subscriber station (TlnB) connected to the terminating exchange and which indicates the establishment of the connection to this subscriber station, characterised in that on the arrival of the switch-through signal (ZD) in place of this switch-through signal the transit exchange (DVST) firstly supplies the originating exchange (UVST) with a control signal (S) which causes the originating exchange to emit the calling line identification (AK) to the transit exchange (DVST), that when the respective calling line identification arrives in the transit exchange the transit exchange then forwards the previously-received switch-through signal (ZD) to the originating exchange, and that the transit exchange makes available for charge metering the calling line identification with which it has been supplied, where appropriate together with the previously-received selection information relating to the called subscriber station (TlnB).

**Revendication**

Procédé pour identifer un poste d'abonné appelant (TlnA), raccordé à un central d'origine (UVST) d'une installation de téléimpression et de commutation de données comportant au moins le central d'origine, au moins un central de transit (DVST) et au moins un central de destination (ZVST), pour le calcul de taxes concernant des communications qui sont établies à partir de ce poste d'abonné par l'intermédiaire d'un central de transit, et selon lequel une telle communication est établie grâce au fait qu'une information de selection est d'abord transmise depuis le central d'origine au central de destination, à la suite de quoi après l'interconnexion du central de destination, ce dernier envoie au central de transit et, par l'intermédiaire de ce dernier, au central d'origine, un signal d'interconnexion (ZD), qui indique cette interconnexion et provoque l'interconnexion du central de transit et du central d'origine en direction de l'abonné appelant, et qu'à partir du signal d'interconnexion considéré se trouve dérivé, dans le central d'origine (UVST), un signal qui doit être transmis par l'intermédiaire du central de destination à un poste d'abonné appelé (TlnB), raccordé à ce central, et à l'aide duquel l'établissement de la liaison est indiqué à ce poste d'abonné, caractérisé par le fait que lors de l'arrivée du signal d'interconnexion (ZD), le central de transit (DVST) envoie au central d'origine (UVST), à la place de ce signal d'interconnexion, un signal de commande (S) déclenchant, au moyen de ce central, l'envoi de l'indicatif d'appel (AK) au central de transit (DVST), que lors de l'arrivée de l'indicatif d'appel considéré dans le central de transit, ce central retransmet alors le signal d'interconnexion (ZD) reçu antérieurement, au central d'origine et que le central de transit prépare l'indicatif d'appel, qui lui est associé, éventuellement avec les informations de sélection reçues antérieurement et concernant le poste d'abonné appelé (TlnB), pour la détermination des taxes.

# FIG 1

0 104 606

# FIG 2